# EUROPEAN PATENT APPLICATION

(11) **EP 4 516 443 A1**
(43) Date of publication of application: **05.03.2025**
(21) Application number: 23816234.1
(22) Date of filing: 03.05.2023
(51) Int. Cl.: B23K 26/362, B23K 26/38, B23K 26/06, B23K 26/16, H01M 50/533, H01M 4/04, B23K 37/04, H01M 50/536, H01M 10/04, B23K 101/36

(54) **LASER CUTTING APPARATUS**

(30) Priority: 03.06.2022 KR 20220068486; 28.03.2023 KR 20230040565
(71) Applicant: LG Energy Solution, Ltd., Seoul 07335 (KR)
(72) Inventor: LEE, Byung Hee, Daejeon 34122 (KR); KIM, Tae Su, Daejeon 34122 (KR); PARK, Dong Hyeuk, Daejeon 34122 (KR); LEE, Seo Jun, Daejeon 34122 (KR); LEE, Hyo Jin, Daejeon 34122 (KR); KIM, Gil Woo, Daejeon 34122 (KR); SEO, Sang Kee, Daejeon 34122 (KR); PARK, Jong In, Daejeon 34122 (KR); LEE, Hyuk Soo, Daejeon 34122 (KR); PARK, Jung Hyun, Daejeon 34122 (KR); KIM, Won Seop, Daejeon 34122 (KR); SONG, Won Gyu, Daejeon 34122 (KR); NA, Ki Beom, Daejeon 34122 (KR); LEE, Heon Seung, Daejeon 34122 (KR); MOON, Hong Seok, Daejeon 34122 (KR)
(74) Representative: Goddar, Heinz J.
(86) International application number: PCT/KR2023/006073
(87) International publication number: WO 2023/234570

(57) **Abstract**

The present invention relates to a laser cutting apparatus capable of reducing a time required for replacement of equipment when changing an electrode model, increasing in replacement interval of the equipment due to deterioration, and improving efficiency of a process by including a mask jig for preventing an electrode from moving during the process.

The laser cutting apparatus according to the present invention is a laser cutting apparatus for notching a moving electrode sheet to provide an electrode tab, the laser cutting apparatus including: a laser emitter that repeatedly emits laser onto a notching region of the electrode sheet along a preset path; a drum that moves the electrode sheet; and a mask jig disposed at a side opposite to the laser emitter with the notching region therebetween so as to support the notching region. The mask jig may be detachable from the drum.

## Description

### TECHNICAL FIELD

### CROSS-REFERENCE TO RELATED APPLICATION

The present application claims the benefit of the priority of Korean Patent Application Nos. 10-2022-0068486, filed on June 03, 2022, and 10-2023-0040565, filed on March 28, 2023, which are hereby incorporated by reference in their entirety.

### TECHNICAL FIELD

The present invention relates to a laser cutting apparatus, and more particularly, to a laser cutting apparatus for cutting an electrode used during manufacturing of a secondary battery.

### BACKGROUND ART

Recently, as prices of energy sources rise due to depletion of fossil fuels and interests about environmental pollution are amplified, a need for eco-friendly alternative energy sources is indispensable for life in the future. Accordingly, research continues on various power generation technologies using sunlight, wind power, tidal power, and so on, and there is also a continuing great interest in power storage systems, such as batteries, for more efficiently using electrical energy generated through the technologies.

Moreover, as the technical development of and a demand for mobile electronic devices and electric vehicles using batteries increase, a demand for batteries as energy sources rapidly increases. Accordingly, much research is conducted on batteries that can meet the various needs.

Batteries that store electrical energy may be generally classified into primary batteries and secondary batteries. While the primary batteries are disposable consumable batteries, the secondary batteries are rechargeable batteries manufactured using a material in which a redox process between current and a substance is repeatable. That is, when a reduction reaction is performed on the material by the current, a power supply is charged, and when an oxidation reaction is performed on the material, the power supply is discharged. Such a charging-discharging is repeatedly performed to generate electricity.

In general, such a secondary battery is completely manufactured by applying an electrode mixture, in which an electrode active material, a conductive material, a binder and the like are mixed, onto an electrode current collector, drying the electrode current collector to manufacturing an electrode, stacking the manufactured electrode together with a separator, and embedding and sealing the same together with an electrolyte in a battery case.

Here, the electrode is manufactured by performing a notching process of cutting an electrode sheet, which is manufactured by applying an electrode active material onto an elongated sheet-shaped electrode current collector, to a desired shape, and then cutting the electrode sheet to a desired length.

In the notching process according to the related art, a method for physically cutting an electrode using a press mold, a method for emitting laser to cut an electrode, or the like, is adopted.

The method using the press mold has problems that, due to deterioration of the press mold, mold polishing costs increase to deteriorate economic feasibility of the process, and replacement of the press mold causes to immobility of equipment. The method for emitting the laser has also a problem that economic feasibility is deteriorated due to costs and time required for replacement of the equipment.

In order to solve these problems, there is a need for a laser cutting apparatus that efficiently performs the electrode notching process using laser.

### DISCLOSURE OF THE INVENTION

### TECHNICAL PROBLEM

The present invention has been devised to solve the problems as above, and an object of the present invention is to provide a laser cutting apparatus capable of reducing a time required for replacement of equipment when changing an electrode model, increasing in replacement interval of the equipment due to deterioration, and improving efficiency of a process by including a jig for preventing an electrode from moving during the process.

### TECHNICAL SOLUTION

A laser cutting apparatus according to the present invention is a laser cutting apparatus for notching a moving electrode sheet to provide an electrode tab, the laser cutting apparatus including: a laser emitter that repeatedly emits laser onto a notching region of the electrode sheet along a preset path; a drum that moves the electrode sheet; and a mask jig disposed at a side opposite to the laser emitter with the notching region therebetween so as to support the notching region. The mask jig may be detachable from the drum.

The drum may include a rotary part, which rotates to move the electrode sheet, and a fixing part, which is disposed at one side in an axial direction of the rotary part and on which the mask jig is mounted.

A fixing groove into which the mask jig is fitted may be defined in the fixing part.

The mask jig may include an opposing part, which has a shape convexly bent toward the notching region and faces the notching region, and a coupling part which is connected to the opposing part to be coupled to the drum.

The opposing part may include a stainless steel material.

In the opposing part, a protrusion having a shape extending in a direction that is away from the coupling part may be provided on a side surface, and, in the fixing part, a side surface groove having a shape corresponding to the protrusion may be defined in an inner side surface that defines the fixing groove. As the protrusion is inserted into the side surface groove, the mask jig may be fixed to the fixing groove.

The opposing part may include a cutting hole, through which a laser beam that has cut the notching region passes, and a foreign substance collecting hole into which foreign substances generated when the notching region is cut are introduced.

The drum may include a connecting hole passing through one surface in the axial direction, and a chamber disposed inside the drum and communicating with the foreign substance collecting hole and the connecting hole.

The laser cutting apparatus may further include a foreign substance discharger that communicates with the connecting hole and discharges the foreign substances generated when the notching region is cut.

The foreign substance discharger may include: a first tube having one end, which is connected to the drum, and an upper portion which is opened so that the foreign substances generated when the notching region is cut are introduced into the first tube; and a second tube connected to the other end of the first tube to extend in a direction that is away from the drum.

The laser cutting apparatus may further include an inhaler connected to the second tube to suction the foreign substances introduced into the second tube.

A laser cutting apparatus according to the present invention is a laser cutting apparatus for notching a moving electrode sheet to provide an electrode tab, the laser cutting apparatus including: a laser emitter that repeatedly emits laser onto a notching region of the electrode sheet along a preset path; and a mask jig disposed at a side opposite to the laser emitter with the notching region therebetween so as to support the notching region. In the mask jig, one surface opposing the laser emitter may be coated with an AlCrN-based material.

In the mask jig, the one surface opposing the laser emitter may be coated with AlCrNOS.

### ADVANTAGEOUS EFFECTS

The laser cutting apparatus according to the present invention is the laser cutting apparatus for notching the moving electrode sheet to provide the electrode tab, the laser cutting apparatus including the laser emitter that repeatedly emits the laser onto the notching region of the electrode sheet along the preset path, the drum that moves the electrode sheet, and the mask jig that is disposed at the side opposite to the laser emitter with the notching region therebetween so as to support the notching region. The mask jig may be detachable from the drum.

Accordingly, the time required for the replacement of the equipment may be reduced when changing the electrode model.

In addition, as the mask jig is not be affected by the other component when being replaced, it may be easier to replace the mask jig.

Moreover, the replacement interval of the equipment due to the deterioration may increase.

Furthermore, the mask jig for preventing the electrode from moving during the process may be included to improve the efficiency of the process.

The effects according to the present invention are not limited by the contents described above, and more various effects are included in the present specification.

### BRIEF DESCRIPTION OF THE DRAWINGS

FIG. 1 is a perspective view schematically illustrating a laser cutting apparatus according to Embodiment 1 of the present invention.
FIG. 2 is a perspective view schematically illustrating a drum, a mask jig, and a foreign substance discharger of the laser cutting apparatus according to Embodiment 1 of the present invention.
FIG. 3 is a perspective view schematically illustrating the drum of the laser cutting apparatus according to Embodiment 1 of the present invention.
FIG. 4 is a perspective view schematically illustrating the mask jig of the laser cutting apparatus according to Embodiment 1 of the present invention.
FIG. 5 is a plan view schematically illustrating a state in which an electrode sheet is notched using the laser cutting apparatus according to Embodiment 1 of the present invention.
FIG. 6 is a perspective view schematically illustrating a drum, a mask jig, and a foreign substance discharger of a laser cutting apparatus according to Embodiment 2 of the present invention.

### MODE FOR CARRYING OUT THE INVENTION

Hereinafter, preferred embodiments of the present invention will be described in detail with reference to the accompanying drawings to enable those skilled in the art to which the present invention pertains to easily carry out the present invention. The present invention may, however, be embodied in different forms and should not be construed as limited by the embodiments set forth herein.

The parts unrelated to the description, or the detailed descriptions of related well-known art that may unnecessarily obscure subject matters of the present invention, will be ruled out in order to clearly describe the present invention. Like reference numerals refer to like elements throughout the whole specification.

Moreover, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

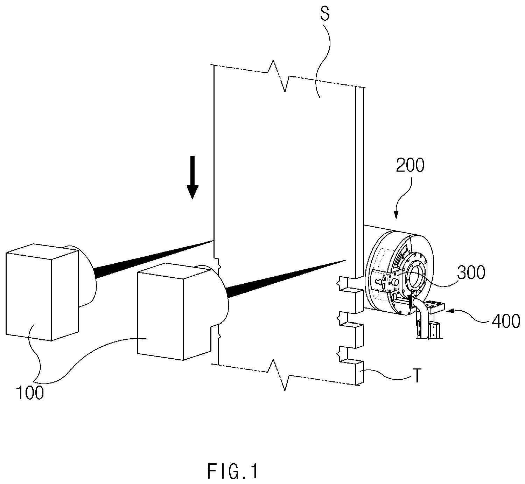

FIG. 1 is a perspective view schematically illustrating a laser cutting apparatus 10 according to Embodiment 1 of the present invention.

The present invention provides, as Embodiment 1, the laser cutting apparatus 10 for notching a moving electrode sheet S to provide an electrode tab T.

Referring to FIG. 1, the laser cutting apparatus 10 according to the present invention may include a laser emitter 100, a drum 200 and a mask jig 300.

A process of forming the electrode tab T during manufacturing of a secondary battery is a process of cutting a portion of an end, which is not coated with an active material, of a metal current collector to have a shape of the electrode tab T, and may employ a cutting process using a device such as a punch that performs vertically intersection movement, a laser cutting process of emitting laser to perform cutting, or the like. The present invention relates to the laser cutting apparatus 10 used in the laser cutting process.

As an example of a component that emits the laser for cutting the electrode sheet S, the laser cutting apparatus 10 according to Embodiment 1 of the present invention may include the laser emitter 100.

The laser cutting apparatus 10 may include a pair of laser emitters 100 that emit the laser at different positions from each other in order to cut both ends of the electrode sheet S.

The laser emitter 100 may repeatedly emit the laser onto a notching region of the electrode sheet S along a preset path. Here, a method for emitting the laser along the preset path may include a method in which the laser emitter 100 emits the laser while moving, or a method in which only a laser irradiation position changes in the fixed laser emitter 100.

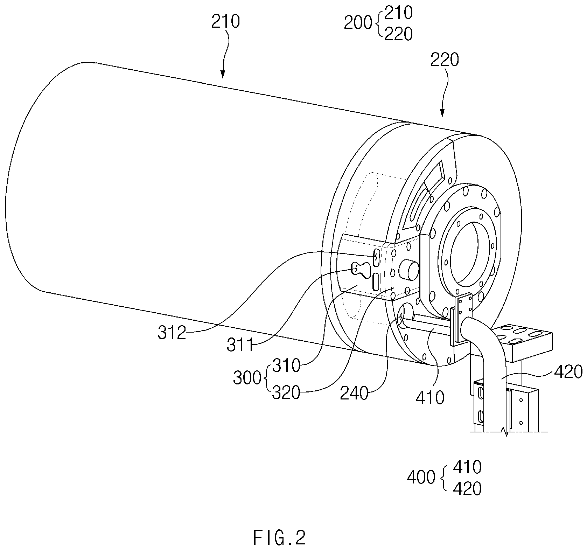

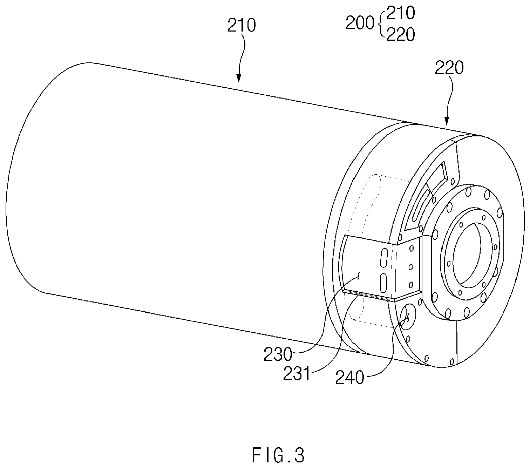

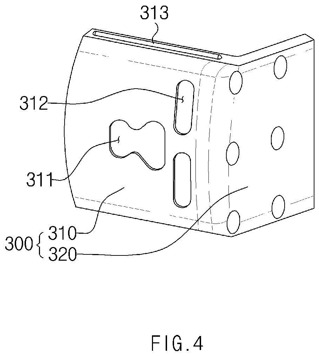

FIG. 2 is a perspective view schematically illustrating the drum 200, the mask jig 300, and a foreign substance discharger 400 of the laser cutting apparatus 10 according to Embodiment 1 of the present invention. FIG. 3 is a perspective view schematically illustrating the drum 200 of the laser cutting apparatus 10 according to Embodiment 1 of the present invention. FIG. 4 is a perspective view schematically illustrating the mask jig 300 of the laser cutting apparatus 10 according to Embodiment 1 of the present invention.

As an example of a component for moving the electrode sheet S, the laser cutting apparatus 10 according to Embodiment 1 of the present invention may include the drum 200.

The drum 200 may move the electrode sheet S while being in contact with the electrode sheet S. Specifically, a portion, which is in contact with the electrode sheet S, of the drum 200 may move the electrode sheet S while rotating.

Referring to FIGS. 2 and 3, the drum 200 may have an approximately cylindrical shape. In addition, the drum 200 may be disposed at a side opposite to the laser emitter 100 with the electrode sheet S therebetween. Thus, the laser may be emitted onto a surface opposite to a surface that is in contact with the drum 200.

As an example of a component for preventing the electrode sheet S from moving during the notching process, the laser cutting apparatus 10 according to Embodiment 1 of the present invention may include the mask jig 300.

In order to support the notching region of the electrode sheet S, the mask jig 300 may be disposed at the side opposite to the laser emitter 100 with the notching region of the electrode sheet S therebetween and be in close contact with the notching region. Specifically, the mask jig 300 may be mounted on the drum 200.

As the cutting by laser is performed in a state in which the electrode sheet S is in close contact with the mask jig 300, interrupting factors such as unnecessary movement of the electrode sheet S may be reduced.

The mask jig 300 according to Embodiment 1 of the present invention may be detachably mounted on the drum 200. That is, the mask jig 300 is a separate component from the drum 200, and may be mountable on the drum 200 and removed from the drum 200 when the replacement is required.

In this regard, an interference with another component may not occur when the mask jig 300 is detached from the drum 200. According to the related art, an interference with another component occurs for replacement of the mask jig 300, and thus it takes a lot of time to replace the mask jig 300. In contrast, in the laser cutting apparatus 10 according to Embodiment 1 of the present invention, an interference with another component may not occur on a path along which the mask jig 300 moves, when detaching the mask jig 300. That is, as the mask jig 300 is detachable from the drum 200 without an interference with other parts, the time required for the replacement may be reduced, and accordingly, efficiency of the process may be improved. The drum 200 according to Embodiment 1 of the present invention may include a rotary part 210 and a fixing part 220.

The rotary part 210 and the fixing part 220 of the drum 200 may be divided according whether to rotate. Specifically, the rotary part 210 may rotate to move the electrode sheet S, the fixing part 220 may be disposed at one side in an axial direction of the rotary part 210, and the mask jig 300 may be mounted on the fixing part 220.

In regard to positions of the drum 200 and the electrode sheet S, the notching region of the electrode sheet S may be disposed at a position corresponding to the fixing part 220 of the drum 200, and a portion other than the notching region of the electrode sheet S may be disposed at a position corresponding to the rotary part 210 of the drum 200.

As the cutting by the laser is performed on both the ends of the electrode sheet S, the laser cutting apparatus 10 according to Embodiment 1 of the present invention may include a pair of drums 200, and a pair of mask jigs 300 mounted on the pair of drums 200, respectively. Here, the drums 200 may be disposed to be symmetric to each other so that the rotary part 210 is disposed at an inner portion of each of the drums 200, and the fixing part 220 is disposed at an outer portion thereof.

As an example of a component for efficiently mounting the mask jig 300, a fixing groove 230 may be provided in the fixing part 220 of the drum 200 according to Embodiment 1 of the present invention. That is, the mask jig 300 may be fitted into the fixing groove 230 of the fixing part 220.

The fixing groove 230 may be provided to be recessed to correspond to the shape of the mask jig 300 for the fitting of the mask jig 300.

Here, one surface, which is in contact with the electrode sheet S, of the mask jig 300 may be disposed on the same curved surface as a curved surface provided by the fixing part 220. Thus, the notching region of the electrode sheet S may be in close contact with each of the fixing part 220 and the mask jig 300 so that stability of the electrode sheet S during the process is improved.

The mask jig 300 according to Embodiment 1 of the present invention may include an opposing part 310 and a coupling part 320.

Referring to FIGS. 2 and 4, the opposing part 310 of the mask jig 300 may have a shape, which is convexly bent toward the notching region of the electrode sheet S, and be disposed to face the notching region. In addition, the coupling part 320 of the mask jig 300 may be connected to the opposing part 310 to be coupled to the drum 200.

Referring to FIG. 4, the mask jig 300 including the opposing part 310 and the coupling part 320 may have a shape having a portion bent. Specifically, the mask jig 300 may have a shape in which the coupling part 320 is bent to be connected to one end of the opposing part 310.

The opposing part 310 may have a shape of an approximately bending plate, and the coupling part 320 may have a shape of an approximately plate.

As an example of a component for fixing the mask jig 300 to the fixing groove 230, a protrusion 313 having a shape extending in a direction that is away from the coupling part 320 may be provided on a side surface of the opposing part 310 according to Embodiment 1 of the present invention. In addition, in the fixing part 220, a side surface groove 231 having a shape corresponding to the protrusion 313 may be defined in an inner side surface that defines the fixing groove 230. Thus, as the protrusion 313 is inserted into the side surface groove 231, the mask jig 300 may be fixed to the fixing groove 230.

Specifically, the protrusion 313 may be provided on each of both side surfaces of the opposing part 310 connected to the coupling part 320. Thus, when the mask jig 300 is inserted into the fixing groove 230, the insertion may start as one end of the protrusion 313 is inserted into the side surface groove 231. In addition, when the protrusion 313 is in a state of being completely inserted into the side surface groove 231, the coupling part 320 may also be disposed to be in a state of being inserted into the fixing groove 230.

When the mask jig 300 is fixed to the fixing groove 230 in a state in which the protrusion 313 is inserted into the side surface groove 231, the mask jig 300 may be prevented from moving in a direction facing the electrode sheet S so that fixing force of the mask jig 300 is improved.

In addition, as the protrusion 313 of the opposing part 310 has the shape extending in the direction that is away from the coupling part 320 on the side surface, the mask jig 300 may be detached from the side surface of the fixing part 220 in a longitudinal direction of the drum 200. Thus, it may be easy to detach the mask jig 300 from the fixing part 220.

The mask jig 300 may include the opposing part 310 to efficiently prevent the electrode sheet S from moving, and may include the coupling part 320 to be efficiently mounted on the drum 200.

As an example of a method in which the coupling part 320 of the mask jig 300 is mounted on the fixing part 220 of the drum 200, a method for utilizing a coupling member such as bolt may be used for the mounting.

Specifically, a hole into which the coupling member is insertable may be defined in one surface of the fixing part 220 of the drum 200, on which the coupling part 320 is mounted, and a hole having a similar shape may be defined also in the coupling part 320. Thus, the coupling part 320 may be mounted on the fixing part 220 while the coupling member passes through all of the hole of the coupling part 320 and the hole of the fixing part 220.

The coupling part 320 of the mask jig 300 may also be mounted on the fixing part 220 of the drum 200 in a method other than the example described above.

As an example of a component for durability enforcement, the opposing part 310 of the mask jig 300 according to Embodiment 1 of the present invention may include a stainless steel material. In addition, in the opposing part 310, one surface facing the notching region may be coated with an AlCrN-based material. Specifically, in the opposing part 310, the one surface facing the notching region may be coated with AlCrNOS.

Here, preferably STS420 may be used as the stainless steel constituting the opposing part 310.

The opposing part 310 of the mask jig 300, which is made of the stainless steel material and coated with AlCrNOS, may have improved durability, wear resistance or the like. Thus, a replacement interval of the mask jig 300 may increase and long-term costs required to perform the processes may be reduced, so that economic feasibility of the process is improved.

As an example of a component for the efficiency of the notching process, a cutting hole 311 and a foreign substance collecting hole 312 may be defined in the opposing part 310 of the mask jig 300 according to Embodiment 1 of the present invention.

Referring to FIG. 4, the cutting hole 311 may be a space through which a beam that has cut the notching region passes, and the foreign substance collecting hole 312 may be a space into which foreign substances generated when the notching region is cut are introduced.

As the moving electrode sheet S is cut to have a desired shape by emitting laser, the cutting hole 311 of the opposing part 310, which is disposed at a portion at which the electrode tab T is provided, may have a shape that is determined according to the shape of the electrode tab T to be provided through the cutting.

In addition, as the cut shapes at both the ends of the electrode sheet S are different, the shapes of the cutting holes 311 defined in the opposing parts 310 of the pair of mask jigs 300, respectively, may be different from each other.

Referring to FIG. 4, the foreign substance collecting hole 312 according to Embodiment 1 of the present invention may be disposed at each of two positions to be spaced apart from the cutting hole 311, and the shape and the position of the foreign substance collecting hole 312 may be determined based on a position at which a large amount of foreign substances accumulate while the process is performed.

As an example of a component into which the foreign substances collected through the foreign substance collecting hole 312 move, the drum 200 of the laser cutting apparatus 10 according to Embodiment 1 of the present invention may further include a chamber defined therein.

Specifically, a connecting hole 240 passing through one surface in the axial direction may be defined in the drum 200, and the chamber may communicate with the foreign substance collecting hole 312 and the connecting hole 240. Here, the connecting hole 240 may be defined in one surface opposite to a surface, which is contact with the rotary part 210, in the fixing part 220 of the drum 200, and the chamber may also be defined inside the fixing part 220.

The foreign substances, which are collected in the foreign substance collecting hole 312 to enter the drum 200, may move along the chamber to be discharged to the outside through the connecting hole 240.

As an example of a component for discharging the foreign substances to the outside, the laser cutting apparatus 10 according to Embodiment 1 of the present invention may further include the foreign substance discharger 400.

The foreign substance discharger 400 may be provided to communicate with the connecting hole 240 of the drum 200, and may discharge the foreign substances, which are generated when the notching region is cut, from the inside to the outside of the drum 200. The foreign substance discharger 400 may be connected to the drum 200 through the connecting hole 240 of the drum 200, and receive the foreign substances to be discharged to the outside through the connecting hole 240.

As described above, as the cutting is performed on both the sides of the electrode sheet S, the laser cutting apparatus 10 according to Embodiment 1 of the present invention may include a pair of foreign substance dischargers 400.

As the foreign substances that are generated during the process and accumulate inside the fixing part 220 of the drum 200 are discharged through the foreign substance discharger 400, a dead time of equipment required for cleaning the foreign substances may be reduced to improve the efficiency of the process.

As an example of a component for efficiently discharging the foreign substances, the foreign substance discharger 400 according to Embodiment 1 of the present invention may include a first tube 410 and a second tube 420.

The first tube 410 may have an upper portion that is opened so that the foreign substances that are generated when the notching region is cut are introduced into the first tube 410 through the opened upper portion. That is, the first tube 410 may receive the foreign substances through the opened upper portion in addition to the foreign substances received from the inside of the fixing part 220 of the drum 200 through the connecting hole 240.

The first tube 410 may have one end connected to the fixing part 220 of the drum 200, and the other end connected to the second tube 420.

The second tube 420 may be connected to the other end of the first tube 410 to extend in a direction that is away from the drum 200.

The first tube 410 according to Embodiment 1 of the present invention may have a shape horizontally extending, and the second tube 420 may have a shape having a portion that is bent to extend downward. Each of the first tube 410 and the second tube 420 may have a different shape as necessary.

As an example of a component for providing force which makes the foreign substances move in the foreign substance discharger 400, the laser cutting apparatus 10 according to Embodiment 1 of the present invention may further include an inhaler.

The inhaler may be connected to the second tube 420 of the foreign substance discharger 400 to suction the foreign substances introduced into the second tube 420.

The laser cutting apparatus 10 may include the inhaler to prevent the foreign substances from continuously accumulating therein.

As described above, as the cutting is performed on both the sides of the electrode sheet S, the laser cutting apparatus 10 according to Embodiment 1 of the present invention may include a pair of inhalers.

The paths along which the foreign substances generated when the notching is cut move are summarized as follows.

The foreign substances may be introduced into the chamber inside the drum 200 through the foreign substance collecting hole 312 of the mask jig 300, and move to the connecting hole 240 along the chamber. Thereafter, the foreign substances may move to the first tube 410 of the foreign substance discharger 400 through the connecting hole 240 so that the foreign substances are suctioned into the inhaler along the first tube 410 and the second tube 420. The foreign substances may be discharged to the outside through this process.

In addition, the foreign substances may be introduced into the first tube 410 through the opened upper portion of the first tube 410 so that the foreign substances are suctioned into the inhaler along the second tube 420.

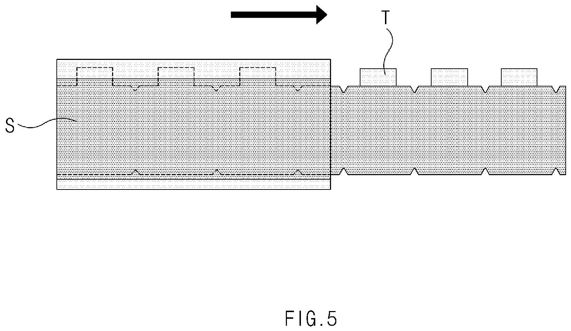

FIG. 5 is a plan view schematically illustrating a state in which the electrode sheet S is notched using the laser cutting apparatus 10 according to Embodiment 1 of the present invention.

Referring to FIG. 5, a state in which the electrode tab T is provided by the laser cutting apparatus 10 according to Embodiment 1 of the present invention may be roughly seen.

In FIG. 5, when the electrode sheet S moves from the left to the right, the electrode sheet S at the left side is in a state before being cut by the laser cutting apparatus 10, and the electrode sheet S at the right side is in a state after being cut.

As illustrated at an upper portion and a lower portion of FIG. 5, the electrode sheet S may be cut to have different shapes at both the sides thereof. Here, the electrode sheet S may have one end at which a non-coating portion is processed to provide the electrode tab T, and the other end at which a portion coated with an active material is cut to have a desired shape.

The laser cutting apparatus 10 according to Embodiment 1 of the present invention may reduce the time required for replacement of the equipment when changing the electrode sheet S, and increase in replacement interval of the equipment due to deterioration to improve the economic feasibility. In addition, the mask jig 300 for preventing the electrode sheet S from moving during the process may be included to improve the efficiency of the process.

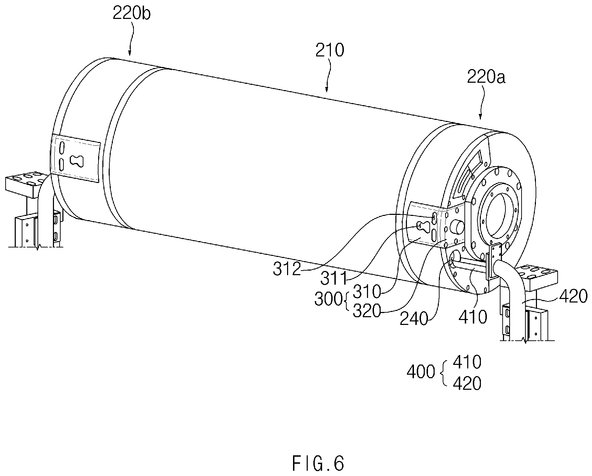

FIG. 6 is a perspective view schematically illustrating a drum, a mask jig 300, and a foreign substance discharger 400 of a laser cutting apparatus according to Embodiment 2 of the present invention.

The present invention provides, as Embodiment 2, a laser cutting apparatus including a drum having a different shape.

Hereinafter, the detailed descriptions of the same components as those of the laser cutting apparatus 10 according to Embodiment 1 of the present invention will be omitted.

As the cutting by laser is performed on both the sides of the electrode sheet S, each of the components included in the laser cutting apparatus 10 according to Embodiment 1 of the present invention may be provided in a pair. That is, the drum 200 according to Embodiment 1 may also be provided in a pair, but the laser cutting apparatus according to Embodiment 2 of the present invention may include one drum having an elongated shape.

Referring to FIG. 6, in the drum, a rotary part 210 of may be disposed in the middle, and fixing parts 220a and 220b may be disposed at both sides of the rotary part 210, respectively. Here, the fixing parts 220a and 220b of the drum may be provided to be symmetric to each other with respect to the rotary part 210.

Thus, a middle portion, on which the cutting is not performed, of the electrode sheet S may be in contact with the rotary part 210 of the drum, and both ends, on which the cutting is performed, of the electrode sheet S may be in contact with the fixing parts 220a and 220b provided at both the sides of the drum, respectively.

Here, a pair of mask jigs 300 may be disposed on the fixing parts 220a and 220b at both the sides, respectively, and a pair of foreign substance discharger 400 may be connected to the fixing parts 220a and 220b at both the sides, respectively.

The pair of mask jigs 300 and the pair of foreign substance discharger 400 may be provided to be symmetric to each other with respect to the rotary part 210 of the drum, except for the shapes of cutting holes 311 defined in opposing parts 310 of the mask jigs 300, respectively.

Compared to the laser cutting apparatus 10 according to Embodiment 1 in which the drums 200 are disposed at both the sides, respectively, the laser cutting apparatus according to Embodiment 2 is just different in that the one drum having an elongated shape is disposed, and may exhibit the same effects due to the other components.

Although the present invention has been described with reference to the limited embodiments and drawings, the present invention is not limited thereto and may be variously implemented by those of ordinary skill in the art to which the present invention pertains, within the technical idea of the present invention and an equivalent of the appended claims.

### [Description of the Symbols]

S: Electrode sheet
T: Electrode tab
10: Laser cutting apparatus
100: Laser emitter
200: Drum
210: Rotary part
220, 220a, 220b: Fixing part
230: Fixing groove
231: Side surface groove
240: Connecting hole
300: Mask jig
310: Opposing part
311: Cutting hole
312: Foreign substance collecting hole
313: Protrusion
320: Coupling part
400: Foreign substance discharger
410: First tube
420: Second tube

## Claims

1. A laser cutting apparatus for notching a moving electrode sheet to provide an electrode tab, the laser cutting apparatus comprising:
a laser emitter configured to repeatedly emit laser onto a notching region of the electrode sheet along a preset path;
a drum configured to move the electrode sheet; and
a mask jig disposed at a side opposite to the laser emitter with the notching region therebetween so as to support the notching region,
wherein the mask jig is detachable from the drum.

2. The laser cutting apparatus of claim 1, wherein the drum comprises:
a rotary part configured to rotate to move the electrode sheet; and
a fixing part, which is disposed at one side in an axial direction of the rotary part and on which the mask jig is mounted.

3. The laser cutting apparatus of claim 2, wherein a fixing groove into which the mask jig is fitted is defined in the fixing part.

4. The laser cutting apparatus of claim 3, wherein the mask jig comprises:
an opposing part having a shape, which is convexly bent toward the notching region, and facing the notching region; and
a coupling part connected to the opposing part to be coupled to the drum.

5. The laser cutting apparatus of claim 4, wherein the opposing part comprises a stainless steel material.

6. The laser cutting apparatus of claim 4, wherein, in the opposing part, a protrusion having a shape extending in a direction that is away from the coupling part is provided on a side surface, and
in the fixing part, a side surface groove having a shape corresponding to the protrusion is defined in an inner side surface configured to define the fixing groove,
wherein, as the protrusion is inserted into the side surface groove, the mask jig is fixed to the fixing groove.

7. The laser cutting apparatus of claim 4, wherein the opposing part comprises:
a cutting hole through which a laser beam that has cut the notching region passes; and
a foreign substance collecting hole into which foreign substances generated when the notching region is cut are introduced.

8. The laser cutting apparatus of claim 7, wherein the drum comprises:
a connecting hole passing through one surface in the axial direction; and
a chamber disposed inside the drum and communicating with the foreign substance collecting hole and the connecting hole.

9. The laser cutting apparatus of claim 8, further comprising a foreign substance discharger communicating with the connecting hole and configured to discharge the foreign substances generated when the notching region is cut.

10. The laser cutting apparatus of claim 9, wherein the foreign substance discharger comprises:
a first tube having one end, which is connected to the drum, and an upper portion which is opened so that the foreign substances generated when the notching region is cut are introduced into the first tube; and
a second tube connected to the other end of the first tube to extend in a direction that is away from the drum.

11. The laser cutting apparatus of claim 10, further comprising an inhaler connected to the second tube to suction the foreign substances introduced into the second tube.

12. A laser cutting apparatus for notching a moving electrode sheet to provide an electrode tab, the laser cutting apparatus comprising:
a laser emitter configured to repeatedly emit laser onto a notching region of the electrode sheet along a preset path; and
a mask jig disposed at a side opposite to the laser emitter with the notching region therebetween so as to support the notching region,
wherein, in the mask jig, one surface opposing the laser emitter is coated with an AlCrN-based material.

13. The laser cutting apparatus of claim 12, wherein, in the mask jig, the one surface opposing the laser emitter is coated with AlCrNOS.
